(19) Europäisches Patentamt / European Patent Office / Office européen des brevets

(11) **EP 2 200 841 B1**

(12) **EUROPÄISCHE PATENTSCHRIFT**

(45) Veröffentlichungstag und Bekanntmachung des Hinweises auf die Patenterteilung:
**28.08.2013 Patentblatt 2013/35**

(21) Anmeldenummer: **08839343.4**

(22) Anmeldetag: **15.10.2008**

(51) Int Cl.:
**G02B 27/09** (2006.01)  **G02B 3/00** (2006.01)
**B42D 15/00** (2006.01)  **B29D 11/00** (2006.01)

(86) Internationale Anmeldenummer:
**PCT/EP2008/008711**

(87) Internationale Veröffentlichungsnummer:
**WO 2009/049866 (23.04.2009 Gazette 2009/17)**

(54) **MEHRSCHICHTKÖRPER SOWIE VERFAHREN ZUR HERSTELLUNG EINES MEHRSCHICHTKÖRPERS**

MULTILAYER BODY AND METHOD FOR PRODUCING A MULTILAYER BODY

CORPS MULTICOUCHE ET PROCÉDÉ POUR FABRIQUER UN CORPS MULTICOUCHE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.10.2007 DE 102007049512**

(43) Veröffentlichungstag der Anmeldung:
**30.06.2010 Patentblatt 2010/26**

(73) Patentinhaber: **OVD Kinegram AG**
**6301 Zug (CH)**

(72) Erfinder:
• SCHILLING, Andreas
  CH-6332 Hagendorn (CH)
• TOMPKIN, Wayne, Robert
  CH-5400 Baden (CH)

(74) Vertreter: **Zinsinger, Norbert et al**
**Louis - Pöhlau - Lohrentz**
**Postfach 30 55**
**90014 Nürnberg (DE)**

(56) Entgegenhaltungen:
WO-A-2004/036507    WO-A-2007/076952
WO-A1-02/096646    WO-A2-2005/106601

**Beschreibung**

Die Erfindung betrifft einen Mehrschichtkörper mit einer transparenten ersten Schicht, in die eine Vielzahl von Mikrolinsen abgeformt ist, und mit einer unterhalb der ersten Schicht in einer festen Lage zur ersten Schicht angeordneten zweiten Schicht, die eine Vielzahl von mikroskopischen Strukturen aufweist, sowie ein Verfahren zur Herstellung eines solchen Mehrschichtkörpers.

Mehrschichtkörper mit Mikrolinsen und unterhalb der Mikrolinsen angeordneten Mikrobildern werden auf unterschiedliche Weise als Sicherheitselemente für Sicherheitsdokumente, wie beispielsweise Banknoten oder Kreditkarten, eingesetzt.

So sind einerseits Sicherheitselemente bekannt, in denen ein zweidimensionales Feld von sphärischen Mikrolinsen oberhalb eines zweidimensionalen Feldes von identischen, repetitiven Mikrobildern angeordnet ist. Eine derartige Anordnung wird beispielsweise in US 5 712 731 beschrieben. Das Sicherheitselement weist eine Vielzahl von identischen, sphärischen Mikrolinsen auf, die gemäss eines regelmässigen zweidimensionalen Mikrolinsenrasters angeordnet sind. Weiter weist das Sicherheitselement eine Vielzahl von identischen, gedruckten Mikrobildern auf, die gemäss eines regelmässigen zweidimensionalen Mikrobildrasters angeordnet sind. Die Periode des Mikrobildrasters und des Mikrolinsenrasters stimmt überein. Die in dem Mikrolinsenraster angeordneten sphärischen Mikrolinsen erzeugen eine punktweise vergrößerte Abbildung der Mikrobilder, so dass für den Betrachter insgesamt eine vergrößerte Darstellung des Mikrobildes sichtbar wird. Da sich der von den Mikrolinsen jeweils dargestellte Bildpunkt des jeweiligen Mikrobildes in Abhängigkeit von dem Betrachtungswinkel ändert, ergibt sich ein optisch variabler Eindruck der vergrößerten Darstellung des Mikrobildes.

Im Weiteren sind Anordnungen von Mikrobildern und Mikrolinsen bekannt, bei denen einer Mikrolinse zwei oder mehrere unterschiedliche Mikrobilder zugeordnet sind, die in Abhängigkeit von dem Betrachtungswinkel sichtbar sind. So beschreibt DE 103 58 784 A1 beispielsweise einen Datenträger, bei dem mittels eines Laserstrahls unter unterschiedlichen Richtungen unterschiedliche Informationen eingeschrieben werden, welche beispielsweise eine Serien-Nummer der Banknote enthalten. Durch die Wirkung des Laserstrahls wird eine Aufzeichnungsschicht des Datenträgers lokal geschwärzt, so dass für jede der in unterschiedlichen Richtungen eingeschriebenen Informationen ein zugeordnetes Mikrobild unterhalb jeder der Linsen eingeschrieben wird. Unterhalb jeder der Mikrolinsen sind so mehrere Mikrobilder vorgesehen, die unter unterschiedlichen Betrachtungswinkeln sichtbar werden. Die jeweiligen, derselben Information zugeordneten Mikrobilder enthalten hierbei jeweils lediglich einen Teil der Informationen, die sich aus der Darstellung der einzelnen Mikrobilder zusammensetzen. Aufgrund der hohen Informationsdichte (mehrere Mikrobilder pro Mikrolinse) und der hohen Anforderungen an die Passergenauigkeit der Zuordnung zwischen Mikrobildern/Mikrolinsen ist es bei diesem Verfahren erforderlich, Mikrolinsen relativ großer Anmessung zu verwenden sowie eine Aufzeichnung der Mikrobilder in die Aufzeichnungsschicht erst nach Applizierung des Mikrolinsenfeldes auf der Aufzeichnungsschicht individuell für jedes Sicherheitsdokument durchzuführen, wodurch sich Nachteile bezüglich der Herstellungskosten ergeben.

Die WO 2007/076952 A2 beschreibt weiter ein Sicherheitselement mit einer mikrooptischen Moiré-Vergrößerungsanordnung, bei der eine Anordnung von Mikromotivelementen und/oder eine Anordnung von Mikrofokussierelementen in ihren periodischen oder zumindest lokal periodischen Bereichen keine Symmetrieachse in der Ebene der Anordnung aufweist. Die Mikrofokussierelemente können hierbei auch von Zylinderlinsen gebildet sein, deren Ausdehnung in Querrichtung zwischen $5\mu m$ und $50\mu m$ liegt.

Die WO 2004/036507 A2 beschreibt ein Verfahren zur Identifizierung eines Dokuments mittels eines Moiré-Musters. Hierbei wird ein Dokument mit einer Basisschicht und eine Überprüfungsschicht übereinander gelegt und das Dokument in Abhängigkeit von dem so produzierten Moiré-Muster akzeptiert oder zurückgewiesen. Dieses Moiré-Muster wird durch die Überlagerung zweier Linienmuster generiert, bei denen sich bei Verschiebung dieser Muster gegeneinander spezielle Bewegungseffekte ergeben.

Die WO 02/096646 A1 beschreibt ein Verfahren zur Herstellung eines Datenträgers, bei dem ein erstes Halbzeug mit einer Oberflächenstruktur mittels einer Kleberschicht mit einem zweiten Halbzeug verbunden wird. Bei der Oberflächenstruktur handelt es sich hierbei um eine großflächige Linsenprägung, durch welche ein "Kippbild-Effekt" erzielt wird.

Die WO 2005/106601 A2 beschreibt eine Sicherheitseinrichtung mit einem Mikrolinsenraster und einem Mikrobildraster, wobei die Mikrobilder hier von Anti-Reflexionsstrukturen gebildet werden, die in einer Reflexionsschicht abgeformt sind. Die Mikrolinsen des Mikrolinsenrasters bestehen aus sphärischen Linsen, können jedoch auch von Zylinderlinsen gebildet werden.

Der Erfindung liegt nun die Aufgabe zugrunde, einen verbesserten Mehrschichtkörper sowie ein Herstellungsverfahren hierzu anzugeben.

Diese Aufgabe wird von einem Mehrschichtkörper nach Anspruch 1 sowie durch ein Verfahren zur Herstellung eines Mehrschichtkörpers nach Anspruch 14 gelöst.

Der erfindungsgemäße Mehrschichtkörper zeichnet sich durch ein für den menschlichen Betrachter dreidimensional erscheinendes optisches Erscheinungsbild aus, welches beim Kippen des Mehrschichtkörpers oder bei Betrachtung des Mehrschichtkörpers aus sich verändernder Blickrichtung einen einprägsamen Bewegungseffekt zeigt. Der erfindungsgemäße Mehrschichtkörper generiert so einen eindrucksvollen optisch variablen Effekt, welcher als optisches Sicherheitsmerkmal Verwendung finden kann. Der optisch variable Eindruck des erfindungsgemäßen Mehrschichtkörpers zeichnet sich gegenüber dem eingangs erwähnten, von auf zweidimensionalen sphärischen Linsenrastem basierenden Sicherheitselementen erzeugten optisch variablen Effekt durch größere Lichtstärke sowie sehr viel größeren Design-Freiheitsgraden bezüglich der erzielbaren Bewegungseffekte aus. Weiter weist der erfindungsgemäße Mehrschichtkörper gegenüber diesen Sicherheitselementen einerseits eine deutlich größere Toleranz bezüglich Fabrikationsfehlern (Winkelfehler, Fokusfehler), wodurch sich die Herstellung vergünstigt. Andererseits bietet der erfindungsgemäße Mehrschichtkörper gegenüber diesen Sicherheitselementen einen erhöhten Schutz gegenüber der Nachahmung des Sicherheitsmerkmals, da die sich dem menschlichen Betrachter zeigenden Bilder nicht lediglich eine vergrößerte Darstellung repetitiv angeordneter identischer Mikrobilder darstellen, d.h. sich die Mikrobilder nicht unmittelbar aus der für den menschlichen Betrachter ergebenden Darstellung ergeben. Vielmehr unterscheidet sich das sich dem menschlichen Betrachter zeigende Bild von dem der Mikrobilder deutlich, so dass eine Nachahmung des optischen Effekts nur schwer möglich ist (die Mikrolinsen und die mikroskopischen Strukturen sind weiter auch in fester Lage zueinander angeordnet, so dass ein Kopieren der mikroskopischen Strukturen ohne Beeinflussung durch das Mikrolinsenraster nicht möglich ist).

Diese Vorteile bestehen auch gegenüber den oben erläuterten Sicherheitselementen, in die unter verschiedenen Richtungen unterschiedliche Informationen mittels eines Lasers eingeschrieben werden: Auch diese Sicherheitselemente können durch Aufzeichnung der sich unter den verschiedenen Blickwinkeln ergebenden Informationen durch entsprechendes Einschreiben dieser Informationen in einen unbeschriebenen Kartenkörper leicht nachgeahmt werden.

Die Erfindung stellt so ein optisch einprägsames, schwer nachahmbares und kostengünstig zu fertigendes Sicherheitselement zur Verfügung.

Mittels des Herstellungsverfahrens nach Anspruch 14 lässt sich der erfindungsgemäße Mehrschichtkörper besonders kostengünstig fertigen, wobei der sich ergebende Mehrschichtkörper über besonders gute Eigenschaften bezüglich Beständigkeit gegen Umwelteinflüsse verfügt und einen sehr hohen Manipulationsschutz gewährleistet insbesondere bei der Verwendung von PC.

Vorteilhafte Weiterbildungen der Erfindung sind in den Unteransprüchen bezeichnet.

Vorzugsweise sind die Koordinatenachse Y1 und die Koordinatenachse Y2 sowie die Koordinatenachse X1 und die Koordinatenachse X2 in dem Bereich jeweils parallel zueinander ausgerichtet und der Linsenabstand und der Mikrobildabstand benachbarter Mikrolinsen bzw. mikroskopischer Strukturen unterscheidet sich in dem Bereich voneinander. Unter "parallel zueinander" ist hierbei eine paralielartige Ausrichtung der Koordinatenachsen im Rahmen der Fertigungstoleranzen zu verstehen. Weiter ist es auch möglich, dass bei unterschiedlichem Linsenabstand und Mikrobildabstand benachbarter Mikrolinsen und mikroskopischer Strukturen die Koordinatenachse Y1 und die Koordinatenachse Y2 sowie die Koordinatenachse X1 und die Koordinatenachse X2 einen Winkel von bis zu 5 °, bevorzugt von bis zu 1 °, einschließen. Unterscheiden sich der Linsenabstand und der Mikrobildabstand benachbarter Mikrolinsen und mikroskopischer Strukturen nicht voneinander, so schließen die Koordinatenachsen Y1 und Y2 sowie die Koordinatenachsen X1 und X2 in dem Bereich bevorzugt einen Winkel zwischen 0,001 ° und 3 ° ein. Es hat sich gezeigt, dass sich durch die Einhaltung dieser Bedingungen der optische Eindruck des Mehrschichtkörpers verbessert.

Die Zylinderlinsen weisen gemäß eines bevorzugten Ausführungsbeispiels der Erfindung eine Breite von weniger als 400 μm, bevorzugt eine Breite von 150 bis 30 μm auf. Die Länge der Zylinderlinsen wird vorzugsweise zwischen 2 mm und 100 mm gewählt, bei einer Strukturtiefe der Zylinderlinsen zwischen 2 μm bis 100 μm, bevorzugt einer Strukturtiefe zwischen 15 μm und 40 μm. Bei Wahl dieser Parameter für die Zylinderlinsen verbessert sich der optische Eindruck des Mehrschichtkörpers und der Mehrschichtkörper kann besonders dünn ausgeführt werden, wodurch sich der Mehrschichtkörper besonders gut für den Einsatz auf flexiblen Sicherheitsdokumenten, wie beispielsweise Banknoten, Identifikations-Dokumente oder Zertifikaten, oder auch für die Produktsicherung eignet.

Die Mikrolinsen werden bevorzugt als refraktive Mikrolinsen ausgebildet. Es ist jedoch auch möglich, dass die Mikrolinsen als diffraktive Mikrolinsen ausgebildet sind. Bei den Mikrolinsen handelt es sich, wie bereits oben ausgeführt, um Zylinderlinsen, insbesondere um Linsen, die eine fokussierende Funktion besitzen und die als Brennpunkt eine Brennpunktlinie besitzen. Sie können hierbei nicht nur eine sphärische, sondern auch eine asphärische polygonale Linsenfunktion besitzen. Bei der Ausbildung als refraktive Mikrolinsen weist der rechtwinkelig zur Längsachse der Zylinderlinsen durchgeführte Schnitt durch die Zylinderlinse zumindest eine abschnittsweise konvexe Außenkontur, beispielsweise in Form eines Kreisbogenabschnitts auf. Es ist jedoch auch möglich, dass diese konvexe Außenkontur dreieckförmig, in Form eines Trapezes oder eines abgeflachten Kreisbogenabschnitts ausgebildet ist.

Weiter ist es auch möglich, dass hier konkav geformte Zylinderlinsen eingesetzt werden. Weiter ist es möglich, dass Bereiche der Zylinderlinsen mit einer Bedruckung versehen sind oder bereichsweise metallisiert sind. Diese Bedruckung oder Metallisierung kann dazu verwendet, um den Kontrast zu vergrößern oder eine Information, beispielsweise ein Logo oder einen Text, zu Bereichen des insgesamt zu zeigenden optisch variablen Bildes hinzuzufügen.

Es hat sich bewährt, dass der Rasterabstand des Mikrolinsenrasters der Summe der Breite der jeweiligen Mikrolinsen und eines zusätzlichen Abstandes zwischen 0 μm und 20 % der Strukturtiefe der Mikrolinsen entspricht.

Gemäß eines bevorzugten Ausführungsbeispiels der Erfindung wird als Mikrolinsenraster ein eindimensionales Raster gewählt, wobei der Rasterabstand der Mikrolinsen des Mikrolinsenrasters in dem Bereich konstant ist. Unterschiedliche Bewegungseffekte in dem Bereich werden hierbei bevorzugt durch Variation der Rasterabstände und Orientierung der Mikrobilder des Mikrobildrasters implementiert, wie weiter unten erläutert. Auf diese Weise ist es möglich, Mehrschichtkörper mit unterschiedlichem optischen Eindruck kostengünstig zu fertigen, da die Kosten für die Anfertigung der Werkzeuge zum Abformen des Mikrolinsenrasters gering gehalten werden können und ein und dieselben Mikrolinsenraster für unterschiedliche Mehrschichtkörper verwendet werden können, die unterschiedliche optische Eindrücke vermitteln. Es ist jedoch auch möglich, dass die Rasterabstände der Mikrolinsen des Mikrolinsenrasters in dem Bereich nicht konstant gewählt werden, so lange die oben angegebene Bedingung eingehalten wird. Hierdurch können interessante Bewegungseffekte generiert und die Nachahmung des optischen Eindrucks des Sicherheitselements weiter erschwert werden. So ist es beispielsweise möglich, durch stetige Änderung der Rasterabstände der Mikrolinsen des Mikrolinsenrasters oder durch periodische Variation der Rasterabstände der Mikrolinsen des Mikrolinsenrasters interessante optische Effekte zu erzielen. Dabei beeinflussen sich der Mikrobildabstand und der Mikrolinsenabstand benachbarter Mikrobilder und Mikrolinsen gegenseitig, wie dies auch weiter unten noch detailliert beschrieben wird.

Die Mikrobilder haben bevorzugt eine Breite von weniger als 400 μm und eine durch die Längsachse in ihrer Orientierung bestimmte Länge, die mehr als 2 mm beträgt. Bevorzugt ist hierbei die Längsachse der Mikrobilder parallel zur Koordinatenachse X1 ausgerichtet, so dass die Querachse der Mikrobilder, die die Richtung der (1-dimensionalen) Verzerrung der Mikrobilder spezifiziert, quer zur Brennpunktlinie der Mikrolinsen, d.h. in jedem Punkt der Brennpunktlinie rechtwinklig zur Brennpunktlinie, ausgebildet ist.

Weiter ist es auch möglich, dass die mikroskopischen Strukturen in Form von Mikrobildern ausgebildet sind, die sich aus der Verzerrung eines für sämtliche mikroskopische Strukturen identischen Grundbildes gemäß der Transformationsfunktion ergibt, d.h. dass das Grundbild entlang der Querachse gegenüber der Längsachse gemäß der Transformationsfunktion verzerrt ist. Weiter ist es möglich, dass in unterschiedlichen Bereichen das identische Grundbild durch unterschiedliche Transformationsfunktionen unterschiedlich verzerrt ist.

Als Transformationsfunktion welche die Verzerrung der Mikrobilder entlang der Querachse gegenüber der Längsachse definiert, wird bevorzugt eine Transformationsfunktion verwendet, welche die Querachse der Mikrobilder gegenüber der Längsachse der Mikrobilder linear staucht, bevorzugt um mehr als das Zehnfache staucht. Unter Querachse wird die Achse verstanden, welche in dem jeweiligen Punkt der Längsachse rechtwinkelig auf der Längsachse steht. Ist die Längsachse so geometrisch transformiert, die Längsachse so beispielsweise schlangenlinienförmig ausgebildet, so ist auch die Querachse entsprechend geometrisch transformiert.

Ein durch die Koordinaten $x_1$ und $y_1$ definiertes Mikrobild wird so beispielsweise wie folgt spezifiziert auf die Koordinaten $x_2$ und $y_2$ eines verzerrten Mikrobildes abgebildet:

$$y_2 = \Delta \cdot s \cdot y_1$$

$$x_2 = \Delta \cdot x_1$$

wobei der Stauchfaktor s größer als 10 ist.

Der Wert $\Delta$ ist hierbei bevorzugt so gewählt, dass die Ausdehnung des Mikrobildes entlang der Querachse in keinem Bereich größer als der Mikrobildabstand ist.

Die Koordinatenachse X2 ist bevorzugt durch die Längsachse der Verzerrung der Mikrobilder bestimmt. Es ist jedoch auch möglich, dass die Längsachse der

Verzerrung der Mikrobilder nicht mit der Koordinatenachse X2 übereinstimmt, sondern von der geometrischen Gestaltung des sich ergebenden optischen Erscheinungsbildes abhängt.

Gemäß eines bevorzugten Ausführungsbeispiel der Erfindung ist das Mikrobildraster von einem zweidimensionalen Mikrobildraster mit zwei oder mehr in Richtung der Koordinatenachse X2 hintereinander angeordneten mikroskopischen Strukturen gebildet. Vorzugsweise wird so ein eindimensionales Mikrolinsenraster mit einem zweidimensionalen Mikrobildraster kombiniert. Hierdurch lassen sich eine Vielzahl einfacher Bewegungseffekte generieren.

So werden beispielsweise die Rasterabstände der Mikrobilder in dem Bereich in Richtung der Koordinatenachse Y2 und der Koordinatenachse X2 jeweils konstant gewählt. Hierdurch kann ein einheitlicher Bewegungseffekt in dem Bereich generiert werden, wobei durch die Wahl des Versatzes der in Richtung der Koordinatenachse X2 nebeneinander liegenden Mikrobilder die Richtung des Bewegungseffekts beeinflusst werden kann. Beim Kippen des Mehrschichtkörpers scheint sich die von dem Mehrschichtkörper gezeigte optische Darstellung in eine Richtung zu bewegen, wobei der Winkel der Bewegungsachse zur Kippachse durch den Versatz der in Richtung der Koordinatenachse X2 nebeneinander liegenden Mikrobilder bestimmt wird. Wird dieser Versatz über die Koordinatenachse X2 konstant gewählt, so scheint sich die optische Darstellung beim Kippen entlang einer linearen Geraden zu bewegen. Wird der Versatz nicht konstant gewählt, lassen sich auch nicht lineare, beispielsweise schlangenlinienförmige Bewegungsmuster erzielen.

Weiter ist es auch möglich, dass die Rasterabstände der Mikrobilder in dem Bereich in Richtung der Koordinatenachse Y2 konstant sind und die Rasterabstände der Mikrobilder in Richtung der Koordinatenachse X2 in Abhängigkeit von der durch die Koordinatenachse Y2 bestimmten Koordinate y und/oder der durch die Koordinatenachse X2 bestimmten Koordinate x gemäss einer Funktion F (x, y) variiert ist. Hierdurch lassen sich Bewegungseffekte realisieren, bei denen beim Kippen des Mehrschichtkörpers sich optische Darstellungen in unterschiedliche Richtung bewegen, die einen Winkel zwischen 0° und 180° einnehmen.

Um visuell gleich erscheinende, sich in unterschiedliche, entgegengesetzte Bewegungsrichtungen bewegende Bilder zu erzielen, werden in einem ersten Teilbereiche erste, gleichartige Mikrobilder vorgesehen, die in einem Mikrobildabstand zueinander angeordnet sind, der kleiner als der Mikrolinsenabstand ist. In einem zweiten Teilbereich des Bereichs sind zweite gleichartige Mikrobilder, die gegenüber den ersten Mikrobildern an der Längsachse der Mikrobilder gespiegelt sind, in einem Mikrobildabstand angeordnet, der größer als der Mikrolinsenabstand ist.

Gemäß eines weiteren bevorzugten Ausführungsbeispiels der Erfindung sind in einem ersten Teilbereich und in einem zweiten, neben dem ersten Teilbereich angeordneten Teilbereich des Bereichs der durch die Brennpunktlinien der Zylinderlinsen bestimmte Linsenabstand und/oder der durch die Beabstandung der Flächenschwerpunkte der Mikrobilder bestimmte Mikrobildabstand voneinander unterschiedlich gewählt. Hierdurch wird bewirkt, dass benachbarte Darstellungen sich beim Kippen unterschiedlich schnell oder in unterschiedliche Richtung bewegen. Wird so in dem ersten Teilbereich die Differenz aus dem Mikrobildabstand und dem Mikrolinsenabstand positiv und in dem zweiten Teilbereich negativ gewählt, so bewegen sich die Darstellungen in entgegengesetzte Richtungen.

Damit sich in dem ersten und zweiten Teilbereich für den menschlichen Betrachter dasselbe visuell sichtbare Bild in entgegengesetzten Richtungen bewegt (bewirkt durch positive/negative Differenz der Abstände), sind - wie bereits oben ausgeführt - in den ersten und zweiten Teilbereichen zueinander um die Längsachse der Mikrobilder gespiegelte Mikrobilder vorzusehen.

Weitere interessante Bewegungseffekte lassen sich dadurch erzielen, dass in einem ersten Teilbereich des Bereichs und in einem zweiten, neben dem ersten Teilbereich angeordneten Teilbereich des Bereichs das jeweilige Mikrobildraster und/oder das Mikrolinsenraster in Bezug auf die Koordinatenachse Y1 bzw. Y2 zueinander einen Phasenversatz aufweisen, die Koordinatenachsen Y1 und Y2 und/oder X1 und X2 jeweils einen unterschiedlichen Winkel einschließen und/oder die Zylinderlinsen eine unterschiedliche Brennweite aufweisen (hier ist es jedoch nach wie vor erforderlich, die Mikrobilder in der Brennebene der Mikrolinsen anzuordnen). Hierdurch ist es möglich, die Bewegungsrichtung und Bewegungsgeschwindigkeit der von dem Mehrschichtkörper in benachbarten Bereichen dargestellten Objekte so zu beeinflussen, dass diese sich deutlich voneinander unterscheiden und sich so ein sehr markanter optischer Eindruck ergibt. Dieser Eindruck kann weiter dadurch verstärkt werden, dass zwei oder mehr erste und zweite Teilbereiche abwechselnd nebeneinander angeordnet sind.

Die Mikrobilder des Mikrobildrasters unterscheiden sich in dem Bereich voneinander, um so beispielsweise eine Größenänderung des sich bewegenden Objektes oder eine kreisende oder radiale Bewegung des sich beim Kippen bewegenden Objekts zu ermöglichen.

Die Mikrobilder des Mikrobildrasters werden in dem Bereich von Mikrobildern gebildet, welche durch eine geometrische Transformation eines Grundbildes umfassend Drehung und/oder Vergrößerung oder Verkleinerung des Grundbildes und anschließender Verzerrung gemäß der Transformationsfunktion gebildet sind. Auf diese Weise ist es möglich, die oben beschriebenen komplexen Bewegungsmuster eines durch das Grundbild definierten Objektes beim Kippen des Mehrschichtkörpers quer zur Längsachse der Zylindermikrolinsen zu erzielen.

Weiter ist es auch möglich, dass die Mikrolinsen des Mikrolinsenrasters bereichsweise unterschiedliche Brennweiten aufweisen. In einem ersten Bereich des Mikrolinsenrasters sind so Mikrolinsen angeordnet, die eine erste Brennweite aufweisen und in einem zweiten Bereich des Mikrolinsenrasters sind Mikrolinsen angeordnet, die eine hiervon verschiedene zweite Brennweite aufweisen. Die dem ersten Bereich des Mikrolinsenrasters zugeordneten mikroskopischen Strukturen sind hierbei in einer ersten Ebene des Mehrschichtkörpers und die dem zweiten Bereich zugeordneten mikroskopischen Strukturen in einer zweiten Ebene des Mehrschichtkörpers angeordnet, wobei die erste Ebene des Mehrschichtkörpers die zweite Ebene des Mehrschichtkörpers durch die jeweilige Brennweite der Mikrolinsen in dem ersten Bereich bzw. in dem zweiten Bereich bestimmt sind (Abstand zwischen Mikrolinsen und mikroskopischen Strukturen entspricht in etwa der jeweiligen Brennweite), d.h. die mikroskopischen Strukturen des ersten Bereichs und des zweiten Bereichs sind in unterschiedlichen Ebenen des Mehrschichtkörpers angeordnet sind.

Die das erste Koordinatensystem aufspannenden Koordinatenachsen X1 und Y1 sind bevorzugt rechtwinklig zueinander ausgerichtet. Es ist jedoch auch möglich, dass diese Koordinatenachsen einen anderen, von Null und 180 ° unterschiedlichen Winkel miteinander einschließen. Dies gilt auch für die Koordinatenachsen X2 und Y2 des zweiten Koordinatensystems. Unter rechtwinkeliger Ausrichtung der Koordinatenachsen wird hierbei verstanden, dass die Koordinatenachsen in jedem Punkt zueinander einen rechten Winkel aufweisen, beispielsweise auch im Fall eines geometrisch transformierten Koordinatensystems mit beispielsweise einer geometrisch transformierten, kreisförmigen Koordinatenachse X1.

Weitere interessante Effekte lassen sich dadurch erzielen, dass das erste und/oder zweite Koordinatensystem von einem Koordinatensystem mit kreisförmigen oder schlangenlinienförmigen Koordinatenachsen gebildet ist. So sind beispielsweise die Brennpunktlinien der Zylinderlinsen, welche die Koordinatenachse X1 bestimmen, in Form einer Vielzahl konzentrischer Kreise oder einer Vielzahl äquidistant angeordneten, schlangenlinienförmigen Linien ausgebildet und die Koordinatenachsen X1 und X2 werden von entsprechenden, geometrisch transformierten Geraden gebildet.

Hierdurch ergeben sich weitere Freiheitsgrade, welche beispielsweise die kreisförmige Bewegung eines Objektes beim Kippen des Mehrschichtkörpers ermöglichen. Diese Effekte lassen sich aus den obigen Ausführungen ableiten, indem der Bereich in entsprechend klein gewählte Teilbereiche zerlegt und die Parameter wie oben verdeutlicht in dem jeweiligen Bereich entsprechend dem gewünschten Bewegungsmuster gewählt werden.

Gemäss eines bevorzugten Ausführungsbeispiels der Erfindung weist die zweite Schicht eine partielle Metallschicht oder eine partielle HRI-Schicht (HRI = High Refraction Index) auf und die mikroskopischen Strukturen sind von den Bereichen der zweiten Schicht gebildet, in denen die Metallschicht bzw. HRI-Schicht vorgesehen ist, oder von den Bereichen der zweiten Schicht gebildet, in denen die Metallschicht bzw. HRI-Schicht nicht vorgesehen ist. Hierdurch ergibt sich ein besonders kontrastreicher optischer Eindruck, so dass das Sicherheitselement auch bei schlechten Lichtverhältnissen noch deutlich sichtbar bleibt.

In den nicht von der partiellen Metallschicht bzw. der partiellen HRI-Schicht bedeckten Bereichen des Mehrschichtkörpers ist der Mehrschichtkörper vorzugsweise transparent oder zumindest semi-transparent ausgebildet, so dass sich in Abhängigkeit von dem Hintergrund, vor dem der Mehrschichtkörper betrachtet wird (z.B. optische Eigenschaften eines Substrats, auf dem der Mehrschichtkörper auflaminiert ist) oder bei Durchlicht-Betrachung ein entsprechend unterschiedlicher optischer Eindruck ergibt. Weiter ist es auch möglich, dass der Mehrschichtkörper über eine vollflächige Metallschicht verfügt und die mikroskopischen Strukturen durch farbige Bereiche oder speziellen, diesen zugeordneten diffraktiven Strukturen gebildet werden.

Bei den HRI-Schichten kann es sich hierbei auch um eine farbige HRI-Schicht handeln, die beispielsweise aus einer dünnen Germanium- oder Siliziumschicht besteht.

Vorzugsweise weist die zweite Schicht eine Replizierlackschicht mit in ihr abgeformten diffraktiven Strukturen auf, wobei insbesondere zwei oder mehr unterschiedliche diffraktive Strukturen abgeformt sind. Gemäss eines bevorzugten Ausführungsbeispiels der Erfindung sind in den mit der metallischen Schicht bzw. der HRI-Schicht versehenen Bereichen und in den nicht mit der metallischen Schicht bzw. der HRI-Schicht versehenen Bereichen der zweiten Schicht unterschiedliche diffraktive Strukturen in der zweiten Schicht abgeformt. Weiter ist auch möglich, dass im Bereich der mikroskopischen Strukturen ein den mikroskopischen Strukturen zugeordnetes ersten Oberflächenrelief in die zweite Schicht abgeformt ist, welches sich von dem umgebenden Oberflächenrelief der zweiten Schicht unterscheidet. Hierdurch ist es möglich, die Erkennbarkeit des Sicherheitsmerkmals weiter zu verbessern und im übrigen noch mit weiteren Sicherheitsmerkmalen zu kombinieren, so beispielsweise eine Farbänderung des Objektes entlang der Bewegungsbahn zu erzielen. Als Oberflächenrelief können beispielsweise diffraktive Strukturen, Mattstrukturen, Makrostrukturen, reine Spiegelstrukturen, asymmetrische Strukturen oder Beugungsstrukturen nullter Ordnung gewählt werden. Das erste und/oder zweite Oberflächenrelief werden so aus einer Gruppe insbesondere umfassend lineare Gitterstrukturen, Kreuzgitterstrukturen, linsenartige Strukturen, asymmetrische Gitterstrukturen, zero-order-Gitterstrukturen oder Kombinationen dieser Strukturen ausgewählt. Weiter ist es auch möglich, die mikroskopischen Strukturen als optisch variable mikroskopische Strukturen auszugestalten, indem in dem Bereich der mikroskopischen Strukturen ein Dünnfilmschichtsystem zur Erzeugung blickwinkelabhängiger Farbverschiebungen, ein vernetztes und orientiertes cholesterisches Flüssigkristallmaterial oder ein Aufdruck mit einem optisch variablen Druckstoff vorgesehen ist.

Weiter ist es auch möglich, dass die zweite Schicht farbige und transparente Bereiche oder verschiedenfarbige und transparente Bereiche aufweist und die mikroskopischen Strukturen durch die farbigen Bereiche, beispielsweise einen farbigen Aufdruck, oder von den transparenten Bereichen gebildet sind.

Weiter ist es auch möglich, dass der von den Zylinderlinsen und den mikroskopischen Strukturen erzeugte optische Effekt mit weiteren

Sicherheitsmerkmalen kombiniert wird, beispielsweise mit einem Hologramm oder einem Kinegram®. Diese weiteren Sicherheitsmerkmale können beispielsweise neben dem erfindungsgemäß ausgestalteten Bereich des Mehrschichtkörpers angeordnet sein oder diesen Bereich auch überlagern. Vorzugsweise bilden diese weiteren Sicherheitselemente ergänzende Darstellungen zu den durch die Mikrolinsen / mikroskopischen Strukturen gebildeten Sicherheitsmerkmalen aus.

Weiter ist es möglich, dass die Zylinderlinsen und die das weitere Sicherheitsmerkmal bereitstellenden diffraktiven Strukturen in Form eines Rasters miteinander verschachtelt angeordnet sind, so dass sich die von diesen Elementen generierten Darstellungen überlagern.

Weiter ist es auch möglich, dass der Mehrschichtkörper über zwei oder mehr Schichten verfügt, die jeweils als zweite Schicht mit einer Vielzahl von mikroskopischen Strukturen ausgebildet sind. So ist es beispielsweise möglich, dass die mikroskopischen Strukturen einer ersten zweiten Schicht von einer partiellen Metallschicht gebildet werden, die mit einer diffraktiven Struktur, beispielsweise einem Kinegram®, belegt ist und die mikroskopischen Strukturen einer zweiten zweiten Schicht von einem farbigen Aufdruck gebildet werden, der - von Seiten des Mikrolinsen betrachtet - auf der Rückseite der Metallschicht oder der Replizierlackschicht aufgedruckt ist. Die erste zweite Schicht zeigt so beispielsweise beim Kippen in einem diffraktiven Farbenspiel erscheinende Sterne, die sich diagonal bewegen. Weiter sind beispielsweise durch einen weißen und roten Aufdruck - in Zusammenwirken mit den Zylinderlinsen bedingt - weiße und rote Sterne sichtbar, die sich beim Kippen hoch und hinunter bewegen.

Im Folgenden wird die Erfindung anhand von mehreren Ausführungsbeispielen unter Zuhilfenahme der beiliegenden Zeichnungen beispielhaft verdeutlicht.

Fig. 1    zeigt eine schematische Schnittdarstellung eines Mehrschichtkörpers.

Fig. 2    zeigt eine schematische Draufsicht auf eine erste Schicht eines Mehrschichtkörpers.

Fig. 3    zeigt eine schematische Draufsicht auf eine zweite Schicht eines Mehrschichtkörpers.

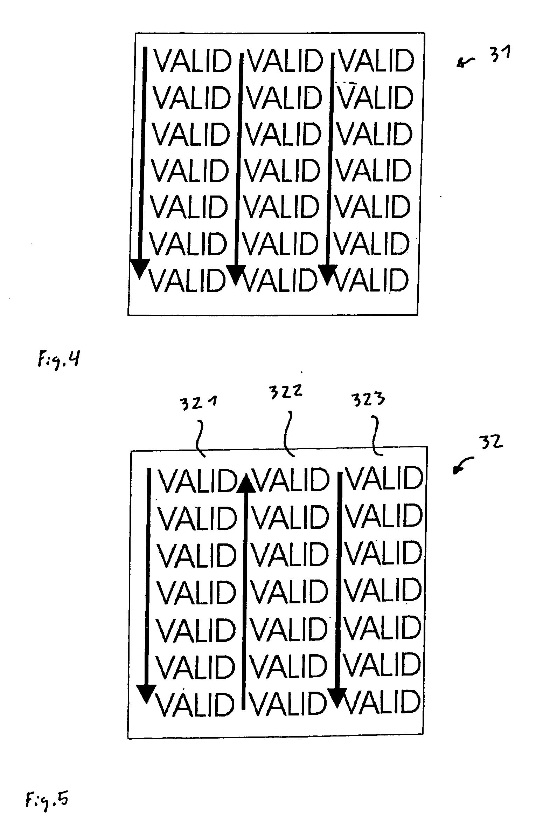

Fig. 4    zeigt eine Ansicht eines Mehrschichtkörpers

Fig. 5    zeigt eine Ansicht eines Mehrschichtkörpers

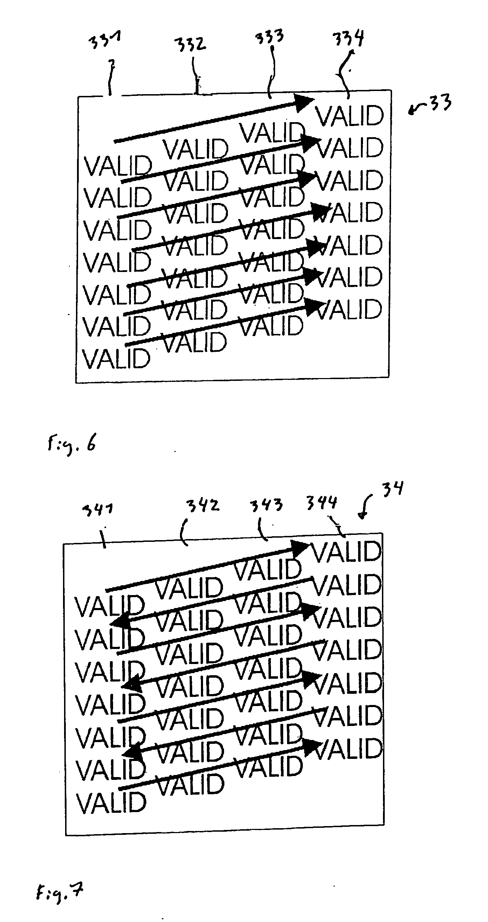

Fig. 6    zeigt eine Ansicht eines Mehrschichtkörpers

Fig. 7    zeigt eine Ansicht eines Mehrschichtkörpers

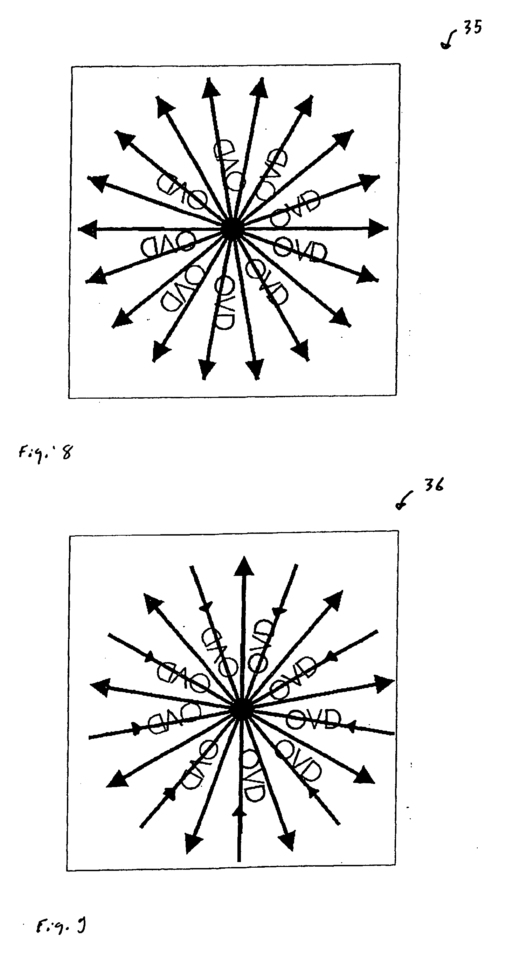

Fig. 8    zeigt eine Ansicht eines Mehrschichtkörpers

Fig. 9    zeigt eine Ansicht eines Mehrschichtkörpers

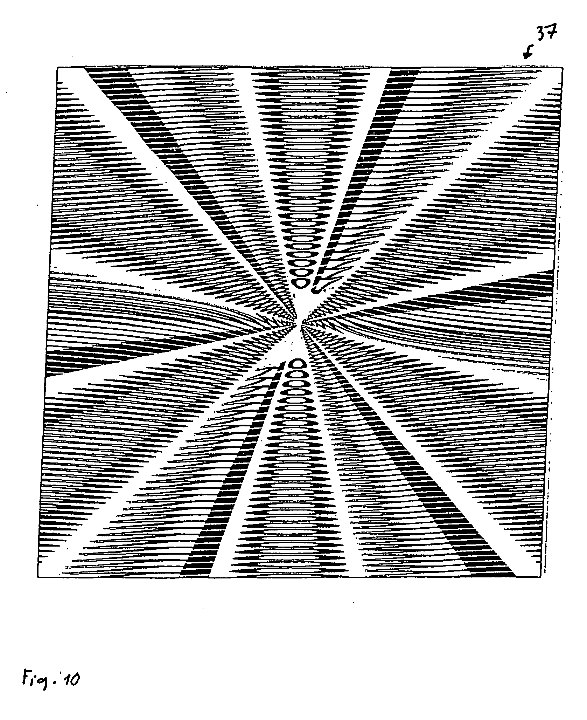

Fig. 10    zeigt eine schematische Draufsicht auf eine zweite Schicht eines erfindungsgemäßen Mehrschichtkörpers

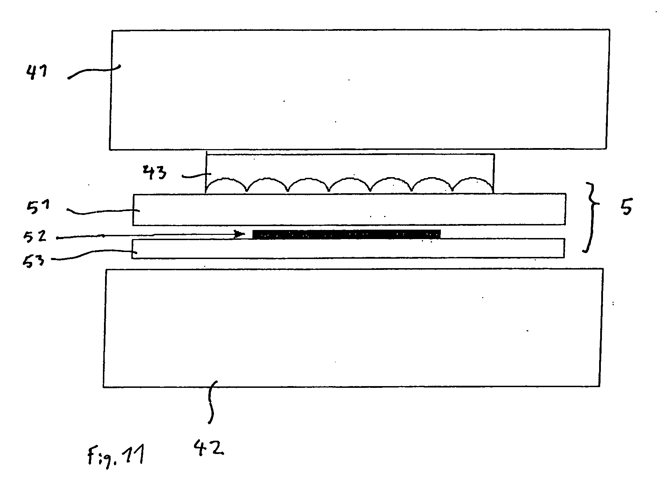

Fig. 11    zeigt eine schematisierte Schnittdarstellung zur Verdeutlichung eines Verfahrens zur Herstellung eines Mehrschichtkörpers.

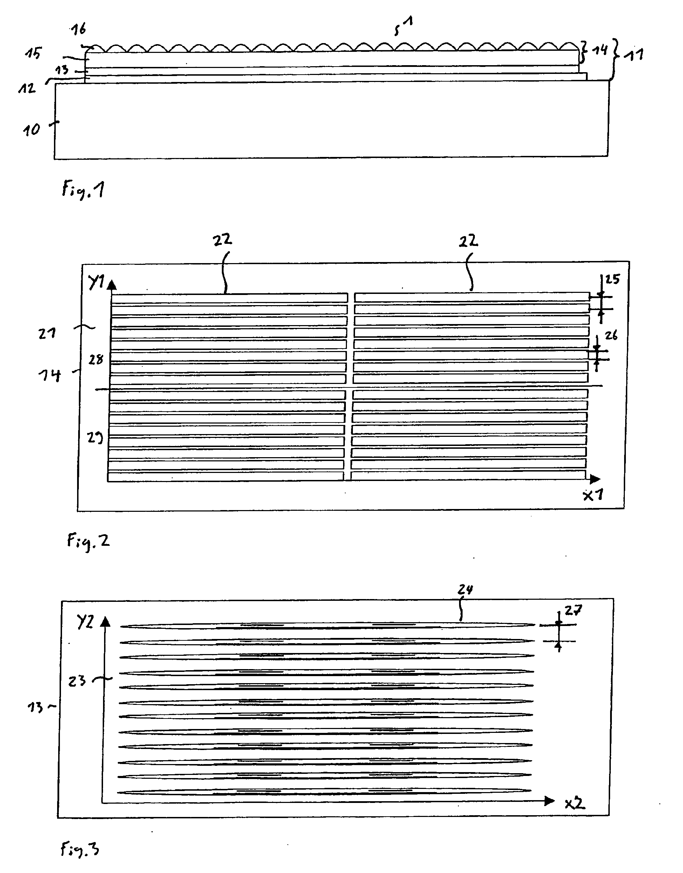

Fig. 1 zeigt einen Mehrschichtkörper 1 mit einer Trägerschicht 10 und einem auf der Trägerschicht 10 applizierten Folienkörper 11. Bei der Trägerschicht 10 handelt es sich vorzugsweise um eine aus einem Papiermaterial bestehende Trägerschicht. So handelt es sich beispielsweise bei dem Mehrschichtkörper 1 um eine Banknote, wobei die Trägerschicht 10 von dem Papiersubstrat der Banknote gebildet wird und der Folienkörper 11 von einer Laminierfolie oder einer Transferlage einer Transferfolie, insbesondere einer Heißprägefolie, gebildet wird, welche beispielsweise in Form eines Patches oder eines Streifens als Sicherheitselement auf das Trägersubstrat der Banknote appliziert ist. Hierbei ist es auch möglich, dass der Folienkörper 11 im Bereich eines transparenten Fensters der Banknote angeordnet ist, in dem das Trägersubstrat der Banknote transparent ausgeführt ist oder durch Stanzen oder mittels eines Wasserzeichens partiell entfernt ist. Weiter ist es auch möglich, dass der Folienkörper 11 als Sicherheitselement auf beliebige andere Trägersubstrate, beispielsweise Kunststoffträger, aber auch Metall oder zu sichernde Waren, appliziert ist.

## Patentansprüche

1.    Mehrschichtkörper (1, 5) mit einer transparenten ersten Schicht (14, 51), in die eine Vielzahl von Mikrolinsen (22) abgeformt ist, und mit einer unterhalb der ersten Schicht in einer festen Lage zur ersten Schicht angeordneten zweiten Schicht (13, 52), die eine Vielzahl von mikroskopischen Strukturen (24) aufweist, wobei

die Mikrolinsen (22) Zylinderlinsen einer Länge von mehr als 2 mm und einer Breite von weniger als 400 $\mu$m sind, die gemäss eines Mikrolinsenrasters (21) angeordnet sind, durch welches ein erstes Koordinatensystem mit einer Koordinatenachse X1, die durch die Brennpunktlinien der Zylinderlinsen (22) bestimmt ist, und einer hierzu unterschiedlichen Koordinatenachse Y1 aufgespannt ist, wobei die mikroskopischen Strukturen (24) in Form von Mikrobildern ausgebildet sind, die entlang einer Querachse gegenüber einer Längsachse gemäss einer Transformationsfunktion verzerrt sind, und die mikroskopischen Strukturen (24) gemäss eines Mikrobildrasters (23) angeordnet sind, durch welche ein zweites Koordinatensystem mit einer Koordinatenachse X2 und einer hierzu unterschiedlichen Koordinatenachse Y2 aufgespannt ist, wobei sich in einem Bereich (31 bis 36) des Mehrschichtkörpers, in dem sich die Mikrolinsen (22) des Mikrolinsenrasters (21) und die mikroskopischen Strukturen (24) des Mikrobildrasters (23) überlagern, der durch die Beabstandung der Brennpunktlinien der Zylinderlinsen (22) bestimmte Linsenabstand und der durch die Beabstandung der Flächenschwerpunkte der Mikrobilder bestimmte Mikrobildabstand benachbarter Mikrolinsen und mikroskopische Strukturen voneinander um nicht mehr als 10 % unterscheiden, und wobei die Mikrobilder des Mikrobildrasters sich in dem Bereich voneinander unterscheiden und in dem Bereich (35, 36) von Mikrobildern gebildet sind, welche durch eine geometrische Transformation eines Grundbildes umfassend Drehung und/oder Vergrößerung oder Verkleinerung des Grundbildes und anschließende Verzerrung gemäss der Transformationsfunktion gebildet sind.

2. Mehrschichtkörper nach Anspruch 1,
**dadurch gekennzeichnet,**
**dass** die Koordinatenachse Y1 und die Koordinatenachse Y2 sowie die Koordinatenachse X1 und die Koordinatenachse X2 in dem Bereich (31 bis 34) jeweils parallel zueinander ausgerichtet sind und sich in dem Bereich (31 bis 34) der Linsenabstand und der Mikrobildabstand benachbarter Mikrolinsen und mikroskopischer Strukturen unterscheidet oder dass die Koordinatenachse Y1 und die Koordinatenachse Y2 sowie die Koordinatenachse X1 und die Koordinatenachse X2 in dem Bereich jeweils einen Winkel zwischen -5 ° und +5 ° einschliessen.

3. Mehrschichtkörper (1, 5) nach einem der vorhergehenden Ansprüche,
**dadurch gekennzeichnet ,**
**dass** die Zylinderlinsen (22) eine Breite von weniger als 400 $\mu$m, bevorzugt eine Breite von 150 bis 30 $\mu$m aufweisen, und/oder die Zylinderlinsen (22) eine Länge zwischen 2 mm und 100 mm aufweisen, und/oder die Zylinderlinsen (22) eine Strukturtiefe von 2 $\mu$m bis 100 $\mu$m, bevorzugt eine Strukturtiefe von 15 $\mu$m bis 40 $\mu$m aufweisen.

4. Mehrschichtkörper nach einem der vorhergehenden Ansprüche,
**dadurch gekennzeichnet,**
**dass** das Mikrolinsenraster ein eindimensionales Raster ist.

5. Mehrschichtkörper nach einem der Ansprüche 1 bis 4,
**dadurch gekennzeichnet,**
**dass** der Rasterabstand des Mikrolinsenrasters sich in dem Bereich stetig ändert oder der Rasterabstand des Mikrolinsenrasters in dem Bereich periodisch variiert ist oder dass der Rasterabstand des Mikrolinsenrasters in dem Bereich (31 bis 36) konstant ist.

6. Mehrschichtkörper nach einem der vorhergehenden Ansprüche,
**dadurch gekennzeichnet,**
**dass** der Rasterabstand des Mikrolinsenrasters der Summe der Breite einer der Mikrolinsen und eines zusätzlichen Abstands zwischen 0 $\mu$m und 20 % der Strukturtiefe der Mikrolinsen entspricht.

7. Mehrschichtkörper (1, 5) nach einem der vorhergehenden Ansprüche,
**dadurch gekennzeichnet,**
**dass** die Mikrobilder eine Breite von weniger als 400 $\mu$m und eine durch die Längsachse in ihrer Orientierung bestimmte Länge von mehr als 2 mm besitzen.

8. Mehrschichtkörper nach einem der vorhergehenden Ansprüche,
**dadurch gekennzeichnet,**
**dass** die Querachse der Mikrobilder gegenüber der Längsachse der Mikrobilder durch die Transformationsfunktion um mehr als das 5-fache, bevorzugt um mehr als das 10-fache gestaucht ist.

9. Mehrschichtkörper (1) nach einem der vorhergehenden Ansprüche,
**dadurch gekennzeichnet,**
**dass** das Mikrobildraster ein zweidimensionales Mikrobildraster mit zwei oder mehr in Richtung der Koordinatenachse X2 hintereinander angeordneten mikroskopischen Strukturen ist.

10. Mehrschichtkörper nach Anspruch 9,
**dadurch gekennzeichnet,**
**dass** die Rasterabstände der Mikrobilder in dem Bereich (35, 36) in Richtung der Koordinatenachse Y2 konstant sind und die Rasterabstände der Mikrobilder in Richtung der Koordinatenachse X2 in Abhängigkeit von der durch die Koordinatenachse Y2 bestimmten Koordinate y und/oder der durch die Koordinatenachse X2 bestimmten Koordinate x gemäss einer Funktion F (x, y) variieren.

11. Mehrschichtkörper nach Anspruch 9,
**dadurch gekennzeichnet,**
**dass** die Rasterabstände der Mikrobilder in dem Bereich (33, 34) in Richtung der Koordinatenachse Y2 und der Koordinatenachse X2 jeweils konstant sind, die Flächenschwerpunkte der in Richtung der Koordinatenachse X2 nebeneinander liegenden Mikrobilder jedoch zueinander einen Versatz aufweisen.

12. Mehrschichtkörper (1) nach einem der vorhergehenden Ansprüche,
**dadurch gekennzeichnet,**
**dass** in einem ersten Teilbereich (321, 323) des Bereichs (32) und in einem zweiten, neben dem ersten Teilbereich angeordneten Teilbereich (322) des Bereichs (32) der durch die Brennpunktlinien der Zylinderlinsen bestimmte Linsenabstand und/oder der durch die Beabstandung der Flächenschwerpunkte der Mikrobilder bestimmte Mikrobildabstand sich voneinander unterscheiden, insbesonders dass in dem ersten Teilbereich (321, 323) die Differenz aus dem Mikrobildabstand und dem Mikrolinsenabstand positiv ist und in dem zweiten Teilbereich (322) negativ ist.

13. Mehrschichtkörper (1) nach einem der vorhergehenden Ansprüche,
**dadurch gekennzeichnet,**
**dass** in einem ersten Teilbereich (331, 333; 341, 343) des Bereichs (33, 34) und in einem zweiten, neben dem ersten Teilbereich angeordneten Teilbereich (332, 334; 342, 344) des Bereichs das jeweilige Mikrobildraster und/oder das Mikrolinsenraster in Bezug auf die Koordinatenachse Y1 bzw. Y2 zueinander einen Phasenversatz aufweisen und/oder dass in einem ersten Teilbereich des Bereichs und in einem zweiten, neben dem ersten Teilbereich angeordneten Teilbereich des Bereichs die Koordinatenachsen Y1 und Y2 und/oder X1 und X2 jeweils einen unterschiedlichen Winkel einschließen und/ oder dass in einem ersten Teilbereich des Bereichs und in einem zweiten, neben dem ersten Teilbereich angeordneten Teilbereich des Bereichs die Zylinderlinsen eine unterschiedliche Brennweite aufweisen.

14. Verfahren zur Herstellung eines Mehrschichtkörpers (5) nach Anspruch 1,
**dadurch gekennzeichnet,**
**dass** eine zweite Schicht (52), welche eine Vielzahl von mikroskopischen Strukturen aufweist, auf eine dritte Schicht (53) appliziert wird, dass eine transparente erste Schicht (51) oberhalb der dritten Schicht (53) angeordnet wird, so dass die zweite Schicht zwischen der ersten und der dritten Schicht angeordnet ist und die erste und die dritte Schicht die zweite Schicht jeweils allseitig überragen, und dass die erste, zweite und dritte Schicht zur Ausbildung des Mehrschichtkörpers mittels eines auf die Oberseite der ersten Schicht und die Unterseite der dritten Schicht eingreifenden Werkzeugs (41, 42, 43) unter Einsatz von Hitze und Druck zusammen laminiert werden, wobei in die Oberseite der ersten Schicht (51) mittels eines Pressblechs (43), in dem eine Negativform eines Linsenrasters abgeformt ist und das Teil des Werkzeugs ist, ein Linsenraster in die Oberfläche der ersten Schicht (51) abgeformt wird.

**Claims**

1. Multilayer body (1, 5) having a transparent first layer (14, 51), into which a plurality of microlenses (22) are impressed, and having a second layer (13, 52) arranged beneath the first layer in a fixed position to the first layer, which has a plurality of microscopic structures (24), wherein the microlenses (22) are cylindrical lenses with a length of greater than 2mm and a width of less than $400\mu$m, which are arranged in accordance with a microlens grid (21), by which a first coordinate system with a coordinate axis X1, which is determined by the focal point lines of the cylindrical lenses (22), and a coordinate axis Y1 that is different herefrom, is spanned, wherein the microscopic structures (24) are designed in the form of micro-images, which are contorted along a transverse axis with respect to a longitudinal axis in accordance with a transformation function, and the microscopic structures (24) are arranged in accordance with a micro-image grid (23), by which a second coordinate system with a coordinate axis X2 and a coordinate axis Y2 that is different herefrom is spanned, wherein, in a region (31 to 36) of the multilayer body in which the microlenses (22) of the microlens grid (21) and the microscopic structures (24) of the micro-image grid (23) overlap, the lens spacing determined by the separation of the focal point lines of the cylindrical lenses (22) and the micro-image spacing of adjacent microlenses and microscopic structures, determined by the separation of the area centroids of the micro-images, differ from one another by no more than 10%, and wherein the micro-images of the micro-image grid differ from one another in the region and are formed in the region (35, 36) of micro-images, which are formed by a geometric transformation of a basic image, comprising rotation and/or enlargement or reduction of the basic image and subsequent contortion in accordance with the transformation function.

2. Multilayer body according to claim 1,
**characterised in that**,
the coordinate axis Y1 and the coordinate axis Y2, as well as the coordinate axis X1 and the coordinate axis X2 in the region (31 to 34) are aligned parallel to one another respectively and, in the region (31 to 34), the lens spacing and the micro-image spacing of adjacent microlenses and microscopic structures differs, or **in that** the coordinate axis Y1 and the coordinate axis Y2, as well as the coordinate axis X1 and the coordinate axis X2 in the region each include an angle between -5° and +5°.

3. Multilayer body (1, 5) according to one of the preceding claims,
**characterised in that**,
the cylindrical lenses (22) have a width of less than $400\mu$m, preferably a width from 150 to $30\mu$m, and/or the cylindrical lenses (22) have a length between 2mm and 100mm, and/or the cylindrical lenses (22) have a structure depth of $2\mu$m to $100\mu$m, preferably a structure depth of $15\mu$m to $40\mu$m.

4. Multilayer body according to one of the preceding claims,
**characterised in that**,
the microlens grid is a one-dimensional grid.

5. Multilayer body according to one of claims 1 to 4,
**characterised in that**,
the grid spacing of the microlens grid changes constantly in the region or the grid spacing of the microlens grid varies periodically in the region or the grid spacing of the microlens grid is constant in the region (31 to 36).

6. Multilayer body according to one of the preceding claims,

characterised in that,
the grid spacing of the microlens grid corresponds to the sum of the width of one of the microlenses and an additional spacing between 0pm and 20% of the structure depth of the microlenses.

7. Multilayer body (1, 5) according to one of the preceding claims,
characterised in that,
the micro-images have a width of less than 400μm and a length, determined by the longitudinal axis in its positioning, of greater than 2mm.

8. Multilayer body according to one of the preceding claims,
characterised in that,
the transverse axis of the micro-images is compressed by more than five times, preferably by more than 10 times the longitudinal axis of the micro-images.

9. Multilayer body (1) according to one of the preceding claims,
characterised in that,
the micro-image grid is a two-dimensional micro-image grid with two or more microscopic structures arranged behind one another in the direction of the coordinate axis X2.

10. Multilayer body according to claim 9,
characterised in that,
the grid spacings of the micro-images in the region (35, 36) are constant in the direction of the coordinate axis Y2, and the grid spacings of the micro-images vary in the direction of the coordinate axis X2, depending on the coordinate y determined by the coordinate axis Y2 and/or the coordinate x determined by the coordinate axis X2 in accordance with a function F (x, y).

11. Multilayer body according to claim 9,
characterised in that,
the grid spacings of the micro-images in the region (33, 34) are constant in the direction of the coordinate axis Y2 and the coordinate axis X2 respectively, whereas the area centroids of the micro-images located alongside one another in the direction of the coordinate axis X2 have an offset to one another.

12. Multilayer body (1) according to one of the preceding claims,
characterised in that,
in a first partial region (321, 323) of the region (32) and in a second partial region (322) of the region (32) arranged alongside the first partial region, the lens spacing determined by the focal point lines of the cylindrical lenses and/or the micro-image spacing determined by the spacing of the area centroids of the micro-images differ from one another, in particular in that the difference from the micro-image spacing and the microlens spacing is positive in the first partial region (321, 323) and is negative in the second partial region (322).

13. Multilayer body (1) according to one of the preceding claims,
characterised in that,
in a first partial region (331, 333; 341, 343) of the region (33, 34) and in a second partial region (332, 334; 342, 344) of the region arranged alongside the first partial region, the respective micro-image grid and/or the microlens grid have phased offsetting to one another with respect to the coordinate axes Y1 and Y2, and/or in that, in a first partial region of the region and in a second partial region of the region arranged alongside the first partial region, the coordinate axes Y1 and Y2 and/or X1 and X2 each include a different angle, and/or in that, in a first partial region of the region and in a second partial region of the region arranged alongside the first partial region, the cylindrical lenses have a different focal length.

14. Method for the production of a multilayer body (5) according to claim 1,
characterised in that,
a second layer (52), which has a plurality of microscopic structures, is applied to a third layer (53), in that a transparent first layer (51) is arranged above the third layer (53), such that the second layer is arranged between the first and the third layer and the first and the third layer each overlap the second layer on all sides, and in that the first, second and third layer are laminated together to form the multilayer body by means of a tool (41, 42, 43) engaging onto the upper side of the first layer and the underside of the third layer using heat and pressure, wherein a lens grid is impressed into the upper side of the first layer (51) by means of a pressing plate (43), in which a negative form of a lens grid is impressed and which is part of the tool, and a lens grid is impressed into the surface of the first layer (51).

**Revendications**

1. Corps multicouche (1, 5) avec une première couche transparente (14, 51), dans lequel une pluralité de microlentilles (22) est moulée, et avec une deuxième couche (13, 52) qui est disposée sous la première couche dans une position fixe par rapport à la première couche et qui présente une pluralité de structures microscopiques (24),
les microlentilles (22) étant des lentilles cylindriques d'une longueur supérieure à 2 mm et d'une largeur inférieure à 400 μm qui sont disposées selon une trame de microlentilles (21) définissant un premier système de coordonnées avec un axe de coordonnées X1 qui est déterminé par les lignes focales des lentilles cylindriques (22), et un axe de coordonnées différent Y1, les structures microscopiques (24) étant réalisées sous la forme de microimages qui sont déformées le long d'un axe transversal par rapport à un axe longitudinal selon une fonction de transformation, et les structures microscopiques (24) étant disposées selon une trame de microimages (23) définissant un second système de coordonnées avec un axe de coordonnées X2 et un axe de coordonnées différent Y2, la distance des lentilles déterminée par l'espacement entre les lignes focales des lentilles cylindriques (22) et la distance des microimages déterminée par l'espacement des centres de gravité de surface des microimages de microlentilles contigües et de structures microscopiques se distinguant l'une de l'autre de pas plus de 10 % dans une zone (31 à 36) du corps multicouche, dans laquelle les microlentilles (22) de la trame de microlentilles (21) et les structures microscopiques (24) de la trame de microimages (23) se superposent, et les microimages de la trame de microimages se distinguant dans la zone et étant constituées dans la zone (35, 36) par des microimages qui sont formées par une transformation géométrique d'une image de base comprenant la rotation et/ou l'agrandissement ou la réduction de l'image de base et la déformation consécutive selon la fonction de transformation.

2. Corps multicouche selon la revendication 1, **caractérisé en ce que** l'axe de coordonnées Y1 et l'axe de coordonnées Y2 ainsi que l'axe de coordonnées X1 et l'axe de coordonnées X2 dans la zone (31 à 34) sont orientés chacun parallèlement et dans la zone (31 à 34), la distance des lentilles et la distance des microimages de microlentilles contigües et structures microscopiques se distinguent ou **en ce que** l'axe de coordonnées Y1 et l'axe de coordonnées Y2 ainsi que l'axe de coordonnées X1 et l'axe de coordonnées X2 forment chacun dans la zone un angle compris entre -5° et +5°.

3. Corps multicouche (1, 5) selon l'une quelconque des revendications précédentes, **caractérisé en ce que** les lentilles cylindriques (22) présentent une largeur inférieure à 400 $\mu$m, de préférence une largeur comprise entre 150 et 30 $\mu$m, et/ou les lentilles cylindriques (22) présentent une longueur comprise entre 2 et 100 mm, et/ou les lentilles cylindriques (22) présentent une profondeur structurelle comprise entre 2 et 100 $\mu$m, de préférence une profondeur structurelle comprise entre 15 et 40 $\mu$m.

4. Corps multicouche (1, 5) selon l'une quelconque des revendications précédentes, **caractérisé en ce que** la trame de microlentilles est une trame à une dimension.

5. Corps multicouche (1, 5) selon l'une quelconque des revendications 1 à 4, **caractérisé en ce que** la distance de la trame de microlentilles se modifie en continu dans la zone ou la distance de la trame de microlentilles est variée périodiquement dans la zone ou **en ce que** la distance de la trame de microlentilles est constante dans la zone (31 à 36).

6. Corps multicouche selon l'une quelconque des revendications précédentes, **caractérisé en ce que** la distance de la trame de microlentilles correspond à la somme de la largeur d'une des microlentilles et d'une distance supplémentaire entre 0 $\mu$m et 20 % de la profondeur structurelle des microlentilles.

7. Corps multicouche (1, 5) selon l'une quelconque des revendications précédentes, **caractérisé en ce que** les microimages possèdent une largeur inférieure à 400 $\mu$m et une longueur déterminée par l'axe longitudinal dans son orientation de plus de 2 mm.

8. Corps multicouche (1, 5) selon l'une quelconque des revendications précédentes, **caractérisé en ce que** l'axe transversal des microimages est comprimé par rapport à l'axe longitudinal des microimages par la fonction de transformation de plus de 5 fois, de préférence de plus de 10 fois.

9. Corps multicouche (1) selon l'une quelconque des revendications précédentes, **caractérisé en ce que** la trame de microimages est une trame de microimages à deux dimensions avec deux ou plus structures microscopiques disposées l'une derrière l'autre en direction de l'axe de coordonnées X2.

10. Corps multicouche selon la revendication 9, **caractérisé en ce que** les distances de trame de microimages dans la zone (35, 36) en direction de l'axe de coordonnées Y2 sont constantes et les distances de trame des microimages en direction de l'axe de coordonnées X2 varient en fonction de la coordonnée y déterminée par l'axe de coordonnées Y2 et/ou la coordonnée x déterminée par l'axe de coordonnées X2 selon une fonction F (x, y).

11. Corps multicouche selon la revendication 9, **caractérisé en ce que** les distances de trame des microimages dans la zone (33, 34) en direction de l'axe de coordonnées Y2 et de l'axe de coordonnées X2 sont chacune constantes, les centres de gravité de surface des microimages se trouvant l'une à côté de l'autre en direction de l'axe de coordonnées X2 présentant toutefois un déport.

12. Corps multicouche (1) selon l'une quelconque des revendications précédentes, **caractérisé en ce que** dans une première zone partielle (321, 323) de la zone (32) et dans une seconde zone partielle (322) disposée à côté de la première zone partielle de la zone (32), la distance de lentilles déterminée par les lignes focales des lentilles cylindriques et/ou la distance de microimages déterminée par l'espacement des centres de gravité de surface des microimages se distinguent, en particulier **en ce que** dans la première zone partielle (321, 323), la différence entre la distance de microimages et la distance de microlentilles est positive et dans la seconde zone partielle (322) est négative.

**13.** Corps multicouche (1) selon l'une quelconque des revendications précédentes, **caractérisé en ce que** dans une première zone partielle (331, 333 ; 341, 343) de la zone (33, 34) et dans une seconde zone partielle (332, 334 ; 342, 344) disposée à côté de la première zone partielle de la zone, la trame de microimages respective et/ou la trame de microlentilles présente par rapport à l'axe de coordonnées Y1 ou Y2 un déphasage et/ou **en ce que** dans une première zone partielle de la zone et dans une seconde zone partielle disposée à côté de la première zone partielle de la zone, les axes de coordonnées Y1 et Y2 et/ou X1 et X2 forment chacun un angle différent et/ou **en ce que** dans une première zone partielle de la zone et dans une seconde zone partielle disposée à côté de la première zone partielle de la zone, les lentilles cylindriques présentent une distance focale différente.

**14.** Procédé de fabrication d'un corps multicouche (5) selon la revendication 1, **caractérisé en ce qu'**une deuxième couche (52) qui présente une pluralité de structures microscopiques, est appliquée sur une troisième couche (53), **en ce qu'**une première couche transparente (51) est disposée au-dessus de la troisième couche (53) de sorte que la deuxième couche soit disposée entre la première et la troisième couche et la première et la troisième couche dépassent respectivement de tout côté la deuxième couche, et **en ce que** la première, deuxième et troisième couche sont laminées ensemble pour la réalisation du corps multicouche à l'aide d'un outil (41, 42, 43) s'engageant sur le côté supérieur de la première couche et le côté inférieur de la troisième couche en utilisant la chaleur et la pression, une trame de lentilles étant moulée dans la surface de la première couche (51) dans son côté supérieur à l'aide d'une tôle de pressage (43), dans laquelle une forme négative d'une trame de lentilles est moulée et est la partie de l'outil.

Fig.1

Fig.2

Fig.3

Fig.4

Fig.5

331    332    333    334

VALID VALID VALID VALID
VALID VALID VALID VALID
VALID VALID VALID VALID
VALID VALID VALID VALID
VALID VALID VALID VALID
VALID VALID VALID VALID
VALID VALID VALID VALID
VALID VALID VALID VALID

↙33

Fig. 6

341    342    343    344    ↙34

VALID VALID VALID VALID
VALID VALID VALID VALID
VALID VALID VALID VALID
VALID VALID VALID VALID
VALID VALID VALID VALID
VALID VALID VALID VALID
VALID VALID VALID VALID
VALID VALID VALID VALID

Fig. 7

Fig. 8

Fig. 9

Fig. 10

fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5712731 A
- DE 10358784 A1
- WO 2007076952 A2
- WO 2004036507 A2
- WO 02096646 A1
- WO 2005106601 A2